# EUROPÄISCHE PATENTSCHRIFT

(11) **EP 2 740 960 B1**
(45) Veröffentlichungstag und Bekanntmachung des Hinweises auf die Patenterteilung: **04.01.2017**
(21) Anmeldenummer: 13005686.4
(22) Anmeldetag: 06.12.2013
(51) Int. Cl.: F16D 63/00

(54) **Brems- und/oder Klemmvorrichtung mit federndem Grundkörper**
Braking and/or clamping device with spring-loaded base body
Dispositif de freinage et/ou de serrage doté d'un corps de base à ressort

(30) Priorität: 06.12.2012 DE 102012023831
(43) Veröffentlichungstag der Anmeldung: 11.06.2014
(73) Patentinhaber: Zimmer, Günther Stephan, 77866 Rheinau (DE); Zimmer, Martin Johannes, 77866 Rheinau (DE)
(72) Erfinder: Zimmer, Günther Stephan, 77866 Rheinau (DE); Zimmer, Martin Johannes, 77866 Rheinau (DE)
(74) Vertreter: Thämer, Wolfgang

(56) Entgegenhaltungen:
- DE-A1- 19 533 077
- US-A1- 2006 042 892
- US-A1- 2007 090 610
- US-A1- 2011 229 064
- US-B1- 6 629 584

## Beschreibung

Die Erfindung betrifft eine Brems- und/oder Klemmvorrichtung zur Anbringung an einem parallel zu einer Führungsschiene geführten Schlitten, wobei sich mindestens zwei die Führungsschiene zum Bremsen oder Klemmen kontaktierende Bremsbacken an einem Grundkörper angeordnet gegenüberliegen, wobei der Grundkörper die Führungsschiene klammerförmig umgibt unter der Ausbildung einer über der Führungsschiene gelegenen Flanschzone und jeweils einer rechts und links neben der Führungsschiene gelegenen, die Bremsbacken tragenden Seitenzone. Die Flanschzone und die Seitenzonen bilden eine die Führungsschiene teilweise umgebende Grundkörpernut.

Aus der DE 10 2005 016 724 B4 ist eine derartige Brems- und/oder Klemmvorrichtung bekannt. Im Grundkörper der Vorrichtung ist ein gewölbter Biegebalken zwischen mindestens zwei Zugankern eingespannt. Auf die Wölbung des Biegebalkens wirkt zur Erzeugung einer Grundkörperspreizung der Kolben einer Zylinder-Kolben-Einheit ein. Die Zylinder-Kolben-Einheit ist dazu quer zur Schienenlängsrichtung gelagert.

Die Schrift US 6 629 584 B1 beschreibt eine Klemmvorrichtung zum Bremsen von Schlitten, in deren Grundkörper entweder im Bereich der Seitenzonen oder im Bereich der Grundkörperoberseite großvolumige Hohlräume ausgebildet sind, die - mit Hydrauliköl befüllt - bei einer Druckbeaufschlagung mindestens eine schmal dimensionierte Grundkörperwandung elastisch verformen.

Aus der DE 195 33 077 A1 ist ein hydraulisch betätigter Klemmschlitten bekannt, bei dem die Bremsbacken mit dem Grundkörper über elastische, stegartige Gelenke verbunden sind. Zwischen den Bremsbacken und dem Grundkörper befinden sich quaderförmige Schlitze, die mit unterseitigen und stirnseitigen Deckeln verschlossen sind. Die durch die Schlitze entstandenen Hohlräume sind mit Hydrauliköl befüllt. Bei einer Druckbeaufschlagung der Hohlräume schwenken die Bremsbacken gegen die Führungsschiene.

Der vorliegenden Erfindung liegt die Problemstellung zugrunde, eine Brems- und/oder Klemmvorrichtung zu entwickeln, die bei großen Klemmkräften einen einfachen und bauraumsparenden Aufbau hat und zudem dauerhaft wartungsfrei ist.

Diese Problemstellung wird mit den Merkmalen des Patentanspruchs 1 gelöst. Dazu ist der Grundkörper mit seiner Oberseite fest am tragenden Schlitten montiert. Im Grundkörper ist zwischen seiner vorderen und hinteren Stirnfläche eine druckbeaufschlagbare Ausnehmung angeordnet, die zumindest bereichsweise die Flanschzone und die beiden Seitenzonen durchzieht. Abschnitte der einteiligen Ausnehmung sind zumindest bereichsweise entlang der Grundkörpernut und entlang der außenliegenden Grundkörperseitenwandungen angeordnet. Der um die Grundkörpernut verlegte Abschnitt der Ausnehmung und die paarweise entlang der Grundkörperseitenwandungen angeordneten Abschnitte der Ausnehmung werden in Kombination verwendet. Die Ausnehmung ist im Bereich der Stirnflächen verschlossen.

Die vorliegende Erfindung basiert auf der Idee, das Gehäuse bzw. das Gestell einer Brems- und/oder Klemmvorrichtung, deren Klemm- oder Lösebewegung mittels eines unter Druck stehenden Mediums bewirkt wird, innerhalb der Vorrichtung ohne bewegliche Vorrichtungsteile auszubilden. Das unter Druck stehende Medium wird hierbei von außen zugeführt.

Um diese Idee zu realisieren, wird ein einteiliger Grundkörper zumindest bereichsweise um eine Führungsschiene so angeordnet, dass sich am Grundkörper angeordnete Bremsbacken zangenartig an der Führungsschiene anlegen können. Im Grundkörper befindet sich eine Ausnehmung, der das unter Druck stehende Medium zugeführt werden kann. Bei der Druckmittelzufuhr verformen sich bestimmte Bereiche des Grundkörpers so, dass sich die Bremsbacken zwangsläufig von der Führungsschiene abheben oder sich an dieser anlegen. Die Klemmkräfte der Bremsbacken sind hierbei beispielsweise gegeneinander oder auf einen ggf. zentralen Punkt innerhalb der Führungsschiene gerichtet.

Wird das Druckmittel dazu benutzt, die Klemmwirkung der Vorrichtung zu lösen, dann wird die Klemmkraft durch das elastische Zurückfedern des Grundkörpers aufgebracht. Im umgekehrten Fall erzeugt das Druckmittel die Klemmwirkung und das elastische Rückfedern des Grundkörpers das Lösen der Bremsbacken.

Als Druckmedium wird beispielsweise ein Hydrauliköl benutzt, das einen aus einer Stahllegierung gefertigten Grundkörper elastisch verformt. Alternativ kann auch Druckluft verwendet werden. In diesem Fall wird als Grundkörperwerkstoff eine Aluminiumlegierung oder ein Verbundwerkstoff eingesetzt, der u.a. glas- oder kohlefaserverstärkte Kunststoffe umfasst.

Selbstverständlich kann die Brems- und/oder Klemmvorrichtung auch vollständig in einen Führungsschuh oder in den Schlitten integriert werden.

Die Vorrichtung ist nicht auf lineare Führungen beschränkt. Sie kann auch auf Kreisbahnen oder anderen, z.B. in einer Ebene liegenden gekrümmten Bahnen verwendet werden.

Weitere Einzelheiten der Erfindung ergeben sich aus den Unteransprüchen und der nachfolgenden Beschreibung schematisch dargestellter Ausführungsformen.
- Figur 1:: Perspektivische Ansicht einer Brems- und/oder Klemmvorrichtung;
- Figur 2:: Frontansicht des Grundkörpers ohne Frontdeckel;
- Figur 3:: Querschnitt durch einen Grundkörper mit integriertem Anschlag;
- Figur 4:: Querschnitt durch die Vorrichtung;
- Figur 5:: Horizontalschnitt "E - E" zu Figur 4;
- Figur 6:: perspektivische Rückansicht zur Frontdichtung;
- Figur 7:: Schematische Darstellung einer Vorrichtung mit w-förmiger Ausnehmung, entspannt;
- Figur 8:: wie Figur 7, jedoch geklemmt und drucklos;
- Figur 9:: wie Figur 7, jedoch entklemmt, bzw. mit Druck beaufschlagt;
- Figur 10:: Schematische Darstellung einer Klemmung mit zwei w-förmigen Ausnehmungen;
- Figur 11:: Schematische Darstellung der w-förmigen Ausnehmung mit mittiger Teilung;
- Figur 12:: wie Figur 11, jedoch mit Druck beaufschlagt;
- Figur 13:: Schematische Darstellung der u-förmigen Ausnehmung;
- Figur 14:: wie Figur 13, jedoch mit Druck beaufschlagt;
- Figur 15:: Schematische Darstellung der y-förmigen Ausnehmung;
- Figur 16:: wie Figur 15, jedoch mit Druck beaufschlagt;
- Figur 17:: w-förmige Ausnehmung mit Mittelfaser.

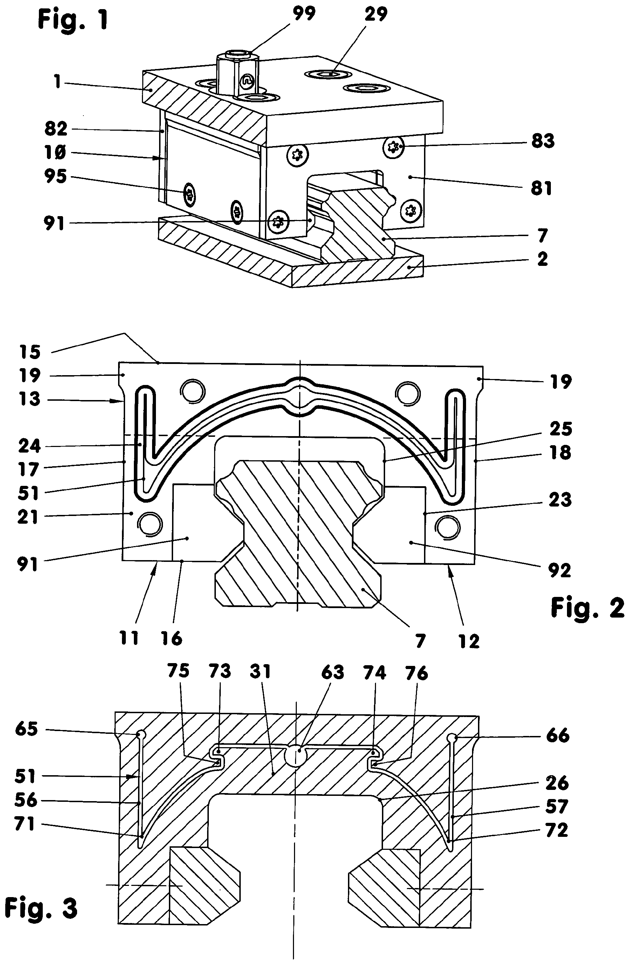

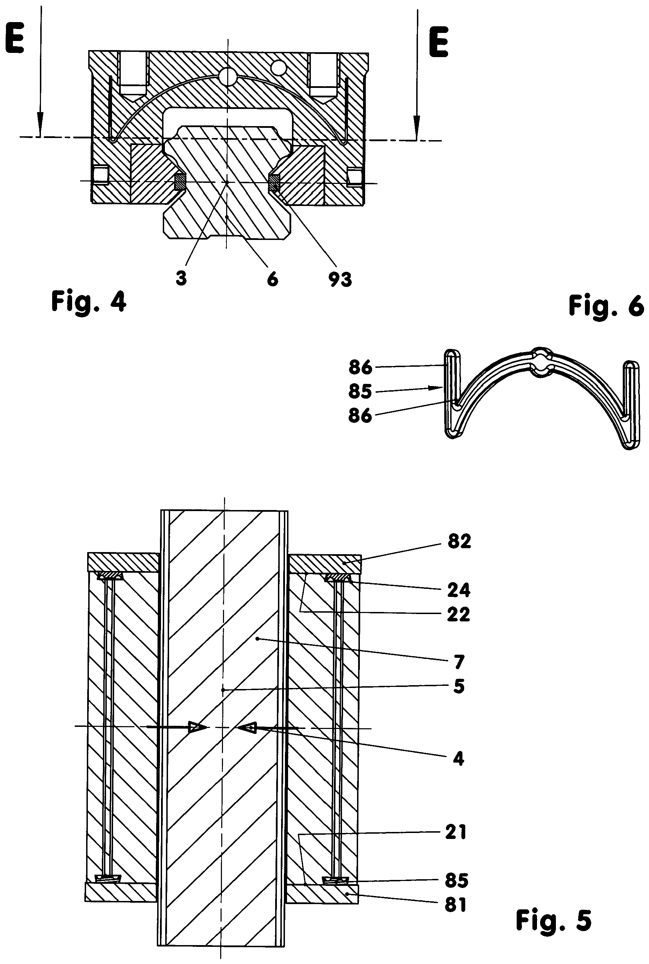

In der Figur 1 ist eine Brems- und/oder Klemmvorrichtung dargestellt, deren Grundkörper (10) an einem Schlitten (1) montiert, nur aus einem zumindest bereichsweise elastischen Bauteil besteht. Der im Prinzip c-förmige Grundkörper (10) umgreift zangenartig eine auf einem Maschinengestell (2) montierte Führungsschiene (7). Er trägt an seinen beiden nach unten ragenden Umgriffen z.B. beidseits je einen Bremsbacken (91, 92). Letztere kommen beim Bremsen und/oder Klemmen quer zur Führungslängsrichtung (5) an der Führungsschiene (7) zur Anlage. Im Grundkörper (10) ist z.B. eine Ausnehmung (51) angeordnet. Die Ausnehmung (51) ist ein den Grundkörper (10) in Führungslängsrichtung (5) durchziehender schmaler Spalt, der u.a. nach den Figuren 2 und 4 zumindest eine w-förmige Kontur aufweist. Die Ausnehmung (51) ist beidseits mit Deckeln (81, 82) verschlossen. Aus der Oberseite des Schlittens (1) ragt z.B. ein Hydraulikanschluss (99) heraus, über den in die Ausnehmung (51) - zum Lösen der Brems- und/oder Klemmvorrichtung - Hydrauliköl gepumpt wird.

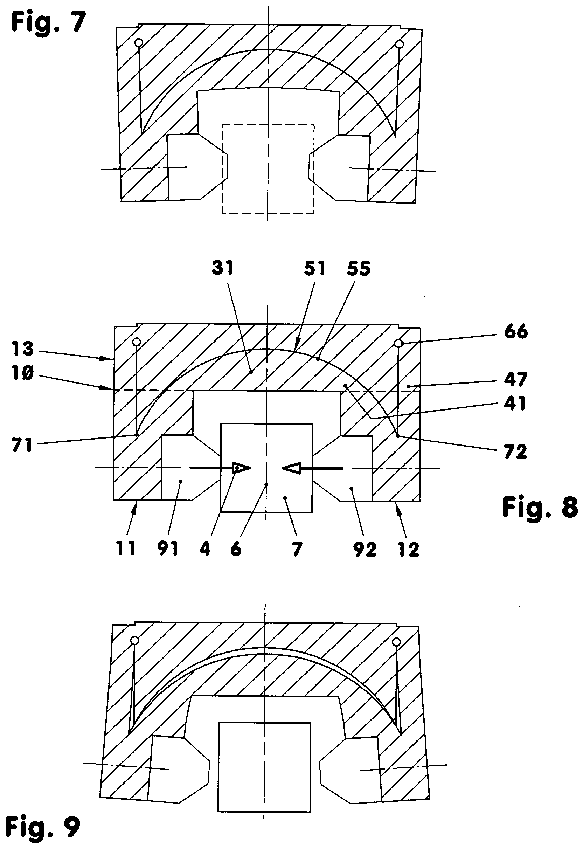

In den Figuren 7 bis 16 sind mehrere Prinzipdarstellungen eines Grundkörperquerschnitts gezeigt. Ein Teil der Figuren stellt unter Öldruck verformte Grundkörper (10) dar. Die Verformungen, die bei den realen Vorrichtungen nur einige zehntel Millimeter messen, sind hier stark überhöht dargestellt.

Die Figur 8 zeigt den Grundkörper (10) in einer vorgespannten Lage, bei der die Bremsbacken (91, 92) an der Führungsschiene (7) fest anliegen. Die Führungsschiene (7) ist hier durch einen Vierkantstab symbolisiert. Die Klemmrichtung (4) steht senkrecht zur Führungslängsrichtung (5) und zugleich lotrecht zur vertikalen Mittenlängsebene (6).

Der Grundkörper (10) besteht aus einer oberhalb der Führungsschiene (7) gelegenen Flanschzone (13) und jeweils einer rechts und links neben der Führungsschiene (7) angeordneten, die Bremsbacken (91, 92) tragenden Seitenzone (11, 12), vgl. auch Figur 2. Hier sind die Seitenzonen (11, 12) an der Flanschzone (13) angeformt. Die Seitenzonen (11, 12) und die Flanschzone (13) umgeben eine Grundkörpernut (25), in deren Freiraum die Führungsschiene (7) angeordnet ist.

Die Seitenzonen (11, 12) haben zur Grundkörpernut (25) hin jeweils ca. in der unteren Hälfte eine Ausnehmung (23), in der jeweils ein Bremsbacken (91, 92) befestigt wird. Nach Figur 4 weist jeder Bremsbacken (91, 92) einen Reibbelag (93) auf, mit dem dieser im gebremsten Zustand der Vorrichtung die Führungsschiene (7) kontaktiert. Die auswechselbaren Bremsbacken (91, 92) sind mit den Schrauben (95) am Grundkörper (10) befestigt, vgl. Figur 1.

Bei einem Ausführungsbeispiel nach den Figuren 2 und 4 bis 6 beträgt die von den Bremsbacken (91, 92) auf die Führungsschiene (7) übertragene Klemmkraft 8000 N. Der Grundkörper (10), der aufgrund seiner Werkstoffelastizität diese Klemmkraft bewirkt, hat nach diesen Figuren die Abmessungen 50 mm * 44 * 24,5 mm. Zwischen den Seitenzonen (11, 12) liegt die Grundkörpernut (25), deren Breite 20,5 mm bei einer Höhe von 15,5 mm beträgt. Als Grundkörperwerkstoff wird z.B. ein Federstahl, beispielsweise der Werkstoff 60MnSiCr4 verwendet. Dieser Werkstoff wird nach dem Bearbeiten auf 52 HRC gehärtet und anschließend bei 500°C angelassen, so dass er eine Resthärte von ca. 46 HRC aufweist.

Wird zwischen den Bremsbacken (91, 92) die Führungsschiene (7) entfernt, federn die Seitenzonen (11, 12) geringfügig aufeinander zu, vgl. Figur 7. Hier ist der Grundkörper (10) in seiner entspannten Form dargestellt. In der spaltförmigen Ausnehmung (51) herrscht kein Überdruck. Der lichte Abstand der Bremsbacken (91, 92) ist kleiner als die Breite der Führungsschiene (7).

Unabhängig von diesen Prinzipskizzen wird beim gefertigten Modell der unverformte, spannungsfreie Grundkörper (10) aus fertigungstechnischen Gründen mit rechtwinkligen Seitenwandungen (17, 18) ausgestattet, die rechtwinklig zur Ober- und Unterseite (15, 16) des Grundkörpers (10) orientiert sind. Damit sich u.a. die vorspannungsbedingten Verformungen einer geklemmten Vorrichtung nicht auf die neben der Vorrichtung liegenden Baugruppen auswirken können, sind an den Seitenwandungen (17, 18) beidseits Vorsprünge (19) angeordnet. Diese Vorsprünge (19) stehen auch dann noch über die Seitenwandungen (17, 18) über, wenn die Vorrichtung zum Freigeben der Führungsschiene (7) geöffnet wird.

Gemäß Figur 8 oder Figur 7 bzw. Figur 4 besteht die Ausnehmung (51) aus einem w-förmigen Spalt. Nach Figur 4 hat die Ausnehmung (51) beim unverformten Grundkörper (10) eine Breite von 0,3 mm. Die Ausnehmung (51) wird hier durch Drahterodieren erzeugt. Alternativ kann die Ausnehmung (51) u.a. auch durch Laser- oder - bei kürzeren Grundkörpern - durch Wasserstrahlschneiden gefertigt werden.

Der w-förmige Spalt setzt sich aus einem Bogenabschnitt (55) und zwei geraden Abschnitten (56, 57) zusammen. Der Bogenabschnitt (55) hat z.B. einen Radius von 20 mm bei einem Zentriwinkel von 127 Winkelgraden. Der Bogenabschnitt (55) ist beispielsweise 1,5 bis 2,5 mm von den Nutecken (26) entfernt. An jedem seitlichen Ende des Bodenabschnittes (55) schließt sich ein gerader Abschnitt (56, 57) an. Diese Abschnitte (56, 57) verlaufen im Wesentlichen parallel zur vertikalen Mittenlängsebene (6). Sie haben im Ausführungsbeispiel jeweils eine Länge von 11 mm. In bestimmten Fällen können die Abschnitte (56, 57) gegenüber der vertikalen Mittenlängsebene (6) auch Winkel zwischen + 15 und - 15 Winkelgraden einnehmen. Auch können die Abschnitte (56, 57) zumindest bereichsweise bogen- oder s-förmig gekrümmt sein.

Ggf. weisen die Abschnitte (56, 57) an ihren freien Enden - zur Minderung der Kerbspannungen - jeweils eine z.B. kreisrunde Entlastungsbohrung (65, 66) auf, deren Durchmesser das Drei- bis Fünffache der Spaltbreite beträgt, vgl. Figur 3.

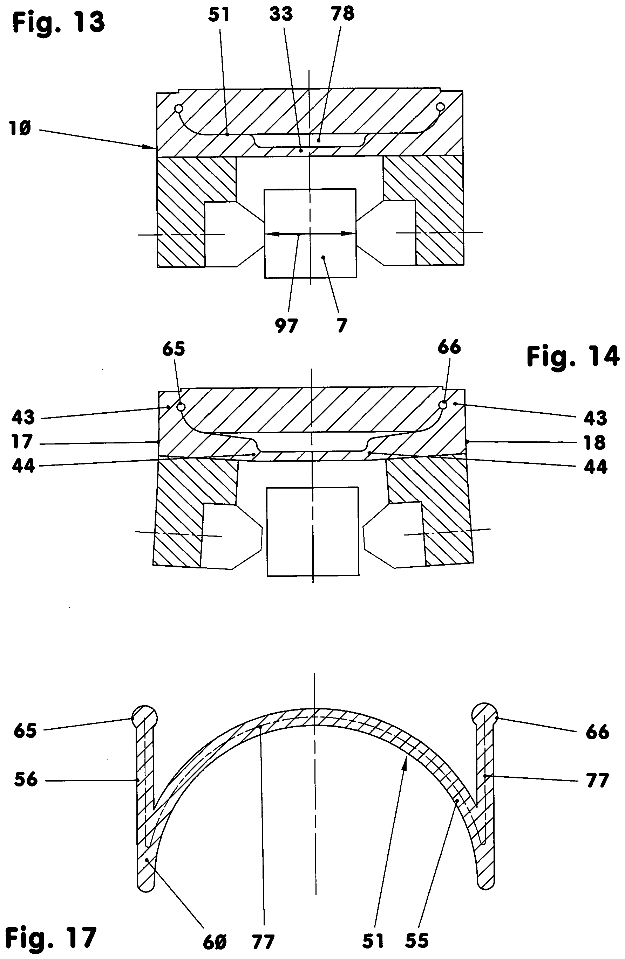

Die Ausnehmung (51) hat im Querschnitt eine Mittelfaser (77), vgl. Figur 17, die den Ausnehmungsquerschnitt (60) seiner Länge und seinem Verlauf nach mittig teilt. Diese Mittelfaser (77) hat nach den Figuren 2 und 4 eine Länge von ca. 66,7 mm. Das entspricht dem fünffachen der Klemmbreite (97), vgl. Figur 13. Letztere ist die Breite der Führungsschiene (7) im Bereich der Bremsbackenanlage.

Nach Figur 2 beträgt die Spaltbreite der geraden Abschnitte (56, 57) 0,2 mm, während die Spaltbreite im Bogenabschnitt (55) z.B. 0,62 mm misst. Zudem wächst die Spaltbreite der Ausnehmung (51) in den beiden Eckbereichen bei dem Übergang vom Bogenabschnitt (55) zum jeweils nächstgelegenen geraden Abschnitt (56, 57) auf z.B. 3,5 mm an. In der Mitte des Bogenabschnittes (55) befindet sich mittig, vgl. Figur 2 und 4, eine Durchgangsbohrung (63), deren Durchmesser zwischen 2 und 4 mm liegt. Über diese Bohrung (63) wird beispielsweise der Erodierdraht eingefädelt und/oder auch die einströmende Hydraulikflüssigkeit verteilt.

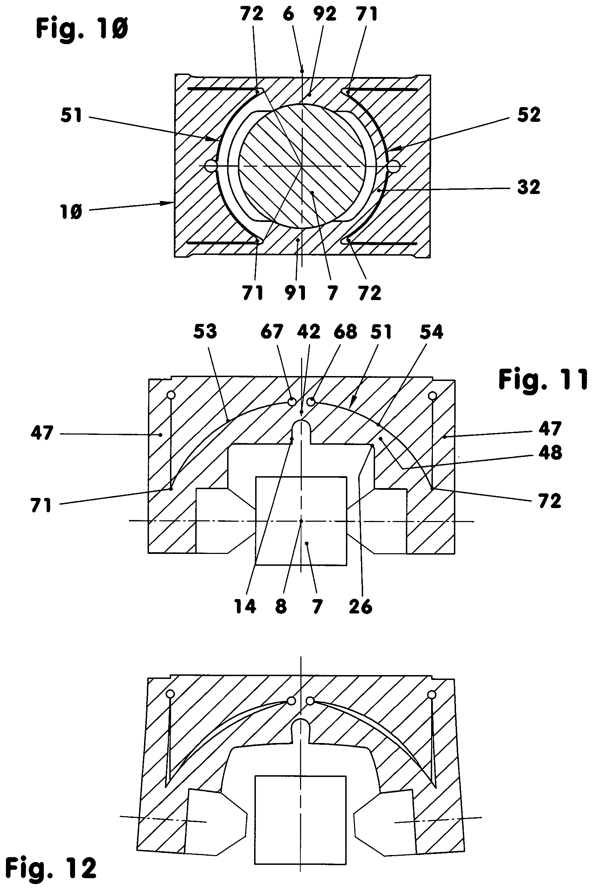

Alternativ kann die Durchgangsbohrung (63) auch seitlich versetzt zum Spalt angeordnet werden, vgl. Figur 3 und 10.

Wird nun zum Lösen der Klemmung über den Hydraulikanschluss (99) in den Bogenabschnitt (55) zusätzlich Hydrauliköl gepresst, der Druck kann je nach Größe und Bauart der Vorrichtung bis zu 350 * 10⁵ Pa betragen, entsteht entlang der gesamten Ausnehmung (51) eine Flächenlast. Unter der Voraussetzung, dass der Grundkörper (10) mit seiner Oberseite (15) fest am Schlitten (1) montiert ist, wird sich der oberhalb des Bogenabschnitts (55) gelegene Grundkörperbereich kaum messbar verformen. Dagegen wird sich der zwischen der Grundkörpernut (25) und dem Bogenabschnitt (55) gelegene Bereich, das sogenannte Mittelstück (31) - aufgrund der zentralen Flächenlast - vergleichbar mit einem Kolben nahezu parallel um einige zehntel Millimeter nach unten verlagern. Zugleich bilden sich zwischen den Spalteckkanten (71, 72) und dem Bogenabschnitt (55) Zonen großer Verformung aus. Diese Zonen stellen elastische Biegegelenke (41) dar.

In den geraden Abschnitten (56, 57) baut sich pro Seitenwandung jeweils eine nach außen wirkende Flächenlast auf, die ein nach Außenbiegen der zwischen den Abschnitten (56, 57) und den nächstgelegenen Seitenwandungen (17, 18) liegenden Biegebalkenzonen (47) zumindest unterstützen. Die jeweilige Biegebalkenzone (47) endet oben in der Nähe der Grundkörperoberseite (15) neben der entsprechenden Entlastungsbohrung (66). Unten endet sie an der Übergangsstelle des geraden Abschnittes (56, 57) zum Bogenabschnitt (55). Die jeweilige formsteife Seitenzone (11, 12) befindet sich zwischen der angeformten Biegebalkenzone (47) und dem am Mittelstück (31) angeschlossenen Biegegelenk (41). Durch das öldruckbedingte Absenken des Mittelstücks (31) schwenkt die einzelne am jeweiligen Biegegelenk (41) angeformte Seitenzone (11, 12) an der sich biegenden Biegebalkenzone (47) elastisch nach außen. In der Folge lösen sich die Bremsbacken (91, 92) von der Führungsschiene (7). Solange der Hydrauliköldruck an der Vorrichtung in erforderlicher Höhe ansteht, bleibt die Klemmung offen.

Um die Hydraulikflüssigkeit im System zu halten, ist der Grundkörper (10) an jeder Stirnseite (21, 22) mit einem Deckel (81, 82) verschlossen, der z.B. aus 16MnCr5 gefertigt ist. Nach den Figuren 1 und 5 sind die Deckel (81, 82) ebene, z.B. 3 mm starke Platten, die jeweils mit vier Schrauben (83), z.B. M 3, fixiert sind. Da die die Grundkörpernut (25) aussparenden Deckel (81, 82) der Verformung des Grundkörpers (10) folgen, blockieren ggf. zusätzliche Passstifte die Lage der Deckel (81, 82) gegenüber dem Grundkörper (10).

Zur leckagesicheren Abdichtung der Ausnehmung (51) ist letztere im Bereich der Stirnseiten (21, 22) mit einer Tiefe von 1,2 mm auf 2 bis 3 mm aufgeweitet, vgl. Figur 5. In dieser Dichtnut (24), die sich beispielsweise zum Nutgrund hin schwalbenschwanzförmig aufweitet, sitzt eine Doppellippendichtung (85), vgl. Figur 6. Die Lippen (86) sind nach dem Einbau zum Nutgrund hin orientiert. Durch den anstehenden Öldruck werden die Lippen (86) fest gegen die seitlichen Wandungen der Dichtnut (24) gepresst. Der Dichtungswerkstoff ist z.B. NBR 70 oder NBR 90.

Wird bei dem Grundkörper (10) nach den Figuren 2 und 4 in der Ausnehmung (51) ein hoher Öldruck aufgebaut, legt sich die der Grundkörpernut (25) nahe gelegene Wandung des Bogenabschnitts (55) an der Spalteckkante (71, 72) der gegenüber gelegenen Wandung der Ausnehmung (51) an.

Die Figur 3 zeigt eine Grundkörpervariante, bei der die Ausnehmung (51) so gestaltet ist, dass zwischen den durch die Ausnehmung (51) getrennten Grundkörperbereichen zwei Anschläge entstehen. Der untere Grundkörperbereich weist zwei nach außen abstehende Vorsprünge (73, 74) auf, während der obere Grundkörperbereich zwei nach innen ragende Vorsprünge (75, 76) hat. Beide sich jeweils einander gegenüberliegende Vorsprünge kontaktieren sich, sobald ein vorgegebener Maximalöldruck überschritten wird.

In Figur 10 ist ein Grundkörper (10) dargestellt, der eine z.B. zylindrische Führungsschiene (7) allseitig umgibt und parallel zur vertikalen Mittenlängsebene (6) klemmt. Der Grundkörper (10) weist zwei w-förmige Ausnehmungen (51, 52) auf, die z.B. spiegelsymmetrisch zur Mittenlängsebene (6) angeordnet sind. Die Führungsstange (7) ist dadurch von einem Ring (32) umgeben. Bei einer Druckbeaufschlagung beider Ausnehmungen (51, 52) wird der Ring (32) zu einem Viererpolygon verformt, dessen Ecken sich dann in der Nähe der Spalteckkanten (71) ausbilden. Dadurch heben sich die Bremsbacken (91, 92) von der Führungsstange (7) ab.

Selbstverständlich kann auch bei dieser Variante die Führungsstange (7) nahezu jeden beliebigen Querschnitt aufweisen. Allerdings werden polygonale oder regelmäßige Vieleckquerschnitte bevorzugt. Auch ist es denkbar, mehr als zwei Ausnehmungen (51, 52) um die Führungsstange (7) zu gruppieren.

Die Figuren 11 und 12 zeigen einen Grundkörper (10), der im Wesentlichen mit dem aus den Figuren 7 bis 8 vergleichbar ist. Jedoch ist die Ausnehmung (51) mittig unterbrochen. In der Unterbrechungsstelle enden beide Hälften (53, 54) der Ausnehmung (51) z.B. in den Entlastungsbohrungen (67, 68). Unterhalb der Entlastungsbohrungen (67, 68) ist ggf. eine Biegenut (14) angeordnet. Der Bereich zwischen den Entlastungsbohrungen (67, 68) und der Biegenut (14) bildet ein elastisches Biegegelenk (42) aus. Der zwischen diesem Biegegelenk (42) und der Spalteckkante (71, 72) unterhalb der jeweiligen Ausnehmungshälfte (53, 54) gelegene Bereich ist eine Biegebalkenzone (48).

Bei einer Druckbeaufschlagung längt sich die Biegebalkenzone (48) - bei dem Versuch in eine Strecklage überzugehen - unter der entstehenden Flächenlast, wobei sich das jeweilige Nuteck (26) um einige zehntel Millimeter in Richtung auf die Mittellinie (8) der Führungsschiene (7) zubewegt. Gleichzeitig biegt sich die einzelne außenliegende Biegebalkenzone (47) nach außen, vgl. Beschreibung zu Figur 9.

Diese Variante wird z.B. bei Klemmungen eingesetzt, deren Bremsbacken (91, 92) konstruktionsbedingt weit auseinander liegen.

In den Figuren 13 und 14 wird ein Grundkörper (10) gezeigt, bei dem die Seitenzonen (11, 12) an die Flanschzone (13) montiert sind. Dadurch ist es z.B. zur Vermeidung komplizierter Dichtungen erforderlich, die Ausnehmung (51) nur in der Flanschzone (13) unterzubringen. Hier wird beispielsweise eine Ausnehmung mit einer im Wesentlichen u-förmigen Mittelfaser gewählt. Im mittleren Bereich ist die Ausnehmung (51) so verbreitert, dass sich entlang dem Nutgrund der Grundkörpernut (25) ein dünnwandiger Steg (33) ausbildet. Dieser Steg (33), er ist hier eine rechteckige Platte, dient als elastische Zugfeder und als Biegebalken. An den Enden des Stegs (33) und in den Bereichen, die seitlich zwischen den Entlastungsbohrungen (65, 66) und den nächstgelegenen Seitenwandungen (17, 18) liegen, entstehen bei einer die Klemmung lösenden Druckbeaufschlagung elastische Biegegelenke (43, 44), vgl. Figur 14. Über den relativ formsteifen, zwischen den Biegegelenken (43, 44) gelegenen Flanschzonenbereich schwenken die Seitenzonen (11, 12) zusammen mit den Bremsbacken (91, 92) geringfügig nach außen, wodurch sich die Bremsbacken (91, 92) von der Führungsschiene (7) lösen.

Nach dem Entlasten des Öldrucks legen sich die Bremsbacken (91, 92) wieder an der Führungsschiene (7) an. Die Klemmkraft ergibt sich primär aus der Zugkraft des Steges (33) und sekundär aus der Rückstellkraft der elastischen Biegegelenke (43, 44).

Anstelle des zwischen dem oberen Teil der Flanschzone (13) und dem Steg (33) gelegenen größeren Hohlraums (78) kann auch die Ausnehmung (51) entlang der im Querschnitt dargestellten Oberkante des Steges (33) entlanggeführt werden.

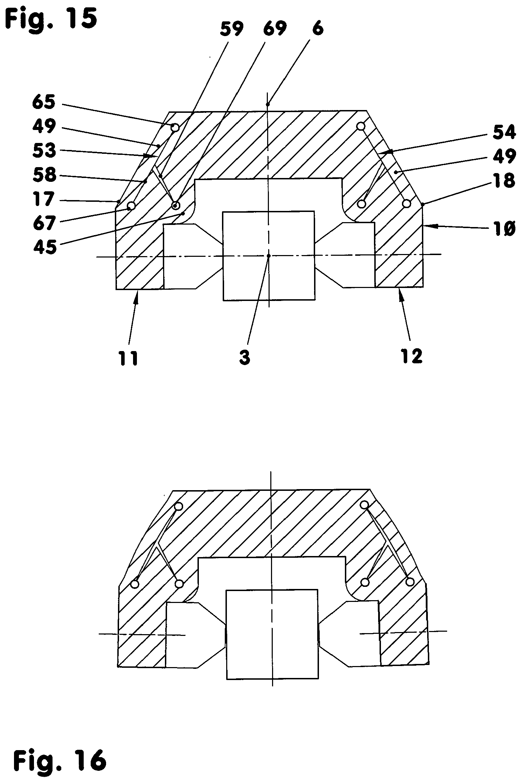

Die Figuren 15 und 16 zeigen einen Grundkörper (10) mit im Bereich der Seitenzonen (11, 12) und darüber angeordneten z.B. y-förmigen Ausnehmungen (53, 54). Hier weisen die einzelnen Seitenwandungen (17, 18) einen zweiseitig eingespannten Biegebalken (49) auf, der jeweils durch einen Teil der Ausnehmungen (53, 54) vom Rest des Grundkörpers (10) separiert ist. Die Seitenwandungen (17, 18) sind z.B. bereichsweise um 30 Winkelgrade gegenüber der vertikalen Mittenlängsebene (6) geneigt. Die Ausnehmungen (53, 54) setzen sich aus einem langen Abschnitt (58) und einem kurzen Abschnitt (59) zusammen. Der lange Abschnitt (58) hat beispielsweise eine Spaltbreite von 0,3 mm und verläuft parallel zur Seitenwandung (17, 18) in einem Abstand von 1 bis 3 mm. Der kurze Abschnitt (59) trifft ca. mittig auf den langen Abschnitt (58). Seine z.B. variable Spaltbreite weitet sich in Richtung des langen Abschnitts (58) auf bis zu 1,5 mm auf.

Bei einer Druckbeaufschlagung der untereinander verbundenen Ausnehmungen (53, 54) dehnt sich der jeweilige Biegebalken (59) nach außen, wodurch der unter der Entlastungsbohrung (67) gelegene Bereich der Seitenzone (11, 12) nach oben gezogen wird. Dadurch schwenkt die entsprechende Bremsbacke (91, 92) um das zwischen der Entlastungsbohrung (69) und der Grundkörpernut (25) gelegene elastische Biegegelenk (45).

Selbstverständlich kann der lange Abschnitt (58) der Ausnehmung (53, 54) bei einem Grundkörper (10) mit einem aus der Figur 8 bekannten Querschnitt entlang der jeweiligen Seitenwandung (17, 18) so geführt werden, dass er z.B. 2 bis 3 mm vor der Grundkörperoberseite (15) und 2 bis 3 mm vor der horizontalen Ebene, in der die Spannmitte (3) liegt, endet. Auf diese Weise kann der lange Abschnitt (58) sehr lang ausgeführt werden. Bei den angegebenen Größenverhältnissen kann seine Länge 20 bis 25 mm betragen.

Alternativ zur y-förmigen Ausnehmung (53, 54) kann im Grundkörper (10) neben jeder Seitenwandung (17, 18) eine Ausnehmung mit einem z.B. dreieckigen Querschnitt angeordnet werden. Die Kanten des Dreieckes verbinden dabei z.B. die Entlastungsbohrungen (65, 67, 69) miteinander.

### Bezugszeichenliste:

- 1: Schlitten
- 2: Maschinengestell
- 3: Spannmitte, Höhe der Klemmkraftwirkungslinie
- 4: Klemmrichtung
- 5: Führungslängsrichtung, Schlittenbewegung
- 6: vertikale Mittenlängsebene
- 7: Führungsschiene, Führungsstange
- 8: Mittellinie

- 10: Grundkörper
- 11: Seitenzone, links
- 12: Seitenzone, rechts
- 13: Flanschzone
- 14: Biegenut
- 15: Oberseite
- 16: Unterseite
- 17, 18: Seitenwandungen
- 19: Vorsprünge

- 21, 22: Stirnseiten, Stirnflächen, vorn, hinten
- 23: Ausnehmung für Bremsbacken
- 24: Dichtnut
- 25: Grundkörpernut
- 26: Nutecken
- 29: Schrauben

- 31: Mittelstück
- 32: Ring
- 33: Steg
- 41, 42: Biegegelenke
- 43, 44: Biegegelenke
- 45: Biegegelenk
- 47, 48: Biegebalkenzone
- 49: Biegebalken
- 51: Ausnehmung
- 52: Ausnehmung
- 53, 54: Hälften, Ausnehmungen
- 55: Bogenabschnitt
- 56, 57: Abschnitte, gerade
- 58: Abschnitt, lang
- 59: Abschnitt, kurz

- 60: Ausnehmungsquerschnitt
- 63: Durchgangsbohrung
- 65, 66: Entlastungsbohrungen
- 67, 68: Entlastungsbohrungen
- 69: Entlastungsbohrungen
- 71, 72: Spalteckkanten

- 73, 74: Vorsprünge, nach außen ragend
- 75, 76: Vorsprünge, nach innen ragend
- 77: Mittelfaser
- 78: Hohlraum

- 81, 82: Deckel
- 83: Schrauben

- 85: Zweilippendichtung
- 86: Lippen

- 91, 92: Bremsbacken
- 93: Reibbelag
- 95: Schrauben
- 97: Klemmbreite
- 99: Hydraulikanschluss

## Patentansprüche

1. Brems- und/oder Klemmvorrichtung zur Anbringung an einem parallel zu einer Führungsschiene (7) geführten Schlitten (1),
- wobei sich mindestens zwei die Führungsschiene (7) zum Bremsen oder Klemmen kontaktierende Bremsbacken (91, 92) an einem Grundkörper (10) angeordnet gegenüberliegen,
- wobei der Grundkörper (10) die Führungsschiene (7) bereichsweise klammerartig umgibt unter der Ausbildung einer über der Führungsschiene (7) gelegenen Flanschzone (13) und jeweils einer rechts und links neben der Führungsschiene (7) gelegenen, die Bremsbacken (91, 92) tragenden Seitenzone (11, 12),
- wobei die Flanschzone (13) und die Seitenzonen (11, 12) eine die Führungsschiene (7) teilweise umgebende Grundkörpernut (25) bilden,
**dadurch gekennzeichnet,**
- **dass** der Grundkörper (10) mit seiner Oberseite (15) fest am tragenden Schlitten (1) montiert ist,
- **dass** im Grundkörper (10) zwischen seiner vorderen und hinteren Stirnfläche (21, 22) eine druckbeaufschlagbare Ausnehmung (51) angeordnet ist, die zumindest bereichsweise die Flanschzone (13) und die beiden Seitenzonen (11, 12) durchzieht,
- **dass** Abschnitte (55-57) der einteiligen Ausnehmung (51) zumindest bereichsweise entlang der Grundkörpernut (25) und entlang der außenliegenden Grundkörperseitenwandungen (17, 18) angeordnet sind,
- **dass** der um die Grundkörpernut (25) verlegte Abschnitt (55) der Ausnehmung (51) und die paarweise entlang der Grundkörperseitenwandungen (17, 18) angeordneten Abschnitte (56, 57) der Ausnehmung (51) in Kombination verwendet werden und
- **dass** die Ausnehmung (51) im Bereich der Stirnflächen (21, 22) verschlossen ist.

2. Vorrichtung gemäß Anspruch 1, **dadurch gekennzeichnet, dass** das die Ausnehmung (51) quer zu einer in der Ausnehmung (51) gelegenen Mittelfaser (77) zumindest bereichsweise eine Breite hat, die kleiner als 1 mm ist, wobei dieser Bereich oder diese Bereiche zusammen mindestens 50% der Länge der Mittelfaser (77) ausmachen.

3. Vorrichtung gemäß Anspruch 2,
**dadurch gekennzeichnet, dass** die maximale Breite der Ausnehmung (51) kleiner ist, als das Zehnfache der regulären Breite.

4. Vorrichtung gemäß Anspruch 1, **dadurch gekennzeichnet, dass** die Ausnehmung (51) bezogen auf den Querschnitt des Grundkörpers (10) einen Krümmungsverlauf hat, der der Form eines "W" entspricht.

5. Vorrichtung gemäß Anspruch 2,
**dadurch gekennzeichnet, dass**
im Querschnitt des Grundkörpers (10) die freien Enden der Mittelfaser (77) im oberen Drittel der Flanschzone (13) liegen, wobei der Abstand zur nächstgelegenen Seitenwandung (17, 18) kleiner ist als 10% der Grundkörperbreite.

6. Vorrichtung gemäß Anspruch 2,
**dadurch gekennzeichnet, dass**
im Querschnitt des Grundkörpers (10) das Maximum der Mittelfaser (77) auf der Höhe freien Enden der Mittelfaser (77) oder im mittleren Drittel der Flanschzone (13) liegt.

7. Vorrichtung gemäß Anspruch 2,
**dadurch gekennzeichnet, dass**
im Querschnitt des Grundkörpers (10) das einzelne Minimum der Mittelfaser (77) im mittleren Drittel der Höhe der jeweiligen Seitenzone (11, 12) liegt.

8. Vorrichtung gemäß Anspruch 2,
**dadurch gekennzeichnet, dass**
im Querschnitt des Grundkörpers (10) mindestens 60% der Mittelfaser (77) auf einem Kreis liegt, dessen Mittelpunkt auf der vertikalen Mittenlängsebene (6) liegt.

9. Vorrichtung gemäß Anspruch 1, **dadurch gekennzeichnet, dass** die Ausnehmung (51) parallel zur Führungslängsrichtung (5) ausgerichtet ist.

10. Vorrichtung gemäß Anspruch 1, **dadurch gekennzeichnet, dass** die Stirnflächen (21, 22) des Grundkörpers (10) mit zumindest quer zur Führungslängsrichtung (5) verformbaren Deckeln (81, 82) verschlossen sind, wobei die Deckel (81, 82) im Bereich der Mittelfaser (77) angeordnete Dichtungen (85) halten.

## Claims

1. Braking and/or clamping apparatus for attachment to a slide element (1) guided to move in parallel with a guide rail (7), comprising
- at least two brake jaws (91, 92) provided on a basic body (10) in a mutually opposing relationship to contact guide rail (7) for braking or clamping,
- the basic body (10) embracing sections of guide rail (7) like a clamp and forming a flange zone (13) extending above the guide rail (7) and lateral zones (11, 12) on the right and left sides of the guide rail (7) to carry brake jaws (91, 92), and
- the flange zone (13) and the lateral zones (11, 12) forming in the basic body a groove (25) partly embracing the guide rail (7),
**characterized in that**
- the basic body (10) has its top (15) mounted firmly to the supporting slide element (1),
- the basic body (10) has disposed between its front and rear end faces (21, 22) a cavity (51), said cavity being adapted to be pressurized and extending at least along sections of the flange zone (13) and the lateral zones (11, 12),
- the sections (55-57) of a one-part cavity (51) are arranged at least section-wise along the groove (25) in the basic body and along the externally extending sidewalls (17, 18) of the basic body,
- the section (55) of the cavity (51) which embrace the groove (25) in said basic body and the sections (56, 57) of cavity (51) which are placed in pairs along the side walls (17, 18) of the basic body are used in combination and
- the cavity (51) is closed in the areas of the end faces (21, 22).

2. Apparatus as claimed in claim 1, **characterized in that** the cavity (51) has at least in sections and in a direction transverse to a central fibre (77) a width smaller than 1 mm, with said section or sections taken together amounting at least 50 % of the length of the central fibre (77).

3. Apparatus as claimed in claim 2, **characterized in that** the maximum width of cavity (51) is smaller than ten times its regular width.

4. Apparatus as claimed in claim 1, **characterized in that** cavity (51) has a curvature corresponding to a letter "W", relative to the cross-sectional shape of basic body (10).

5. Apparatus as claimed in claim 2, **characterized in that**, in the cross-sectional shape of the basic body (10), the free ends of central fiber (77) are disposed in the top third of the flange zone (13), with the distance to the nearest sidewall (17, 18) smaller than 10 % of the width of the basic body.

6. Apparatus as claimed in claim 2, **characterized in that**, in the cross-sectional shape of the basic body (10), the maximum of the central fibre (77) is arranged to lie at the height of the free ends of the central fibre (77) or in the middle third of the flange zone (13).

7. Apparatus as claimed in claim 2, **characterized in that**, in the cross-sectional shape of the basic body (10), the single minimum of the central fibre (77) is arranged to lie in the middle third of the height of the respective lateral zone (11, 12).

8. Apparatus as claimed in claim 2, **characterized in that**, in the cross-sectional shape of the basic body (10), at least 60 % of the central fibre (77) are provided to lie on a circle having its centre in the vertical central longitudinal plane (6).

9. Apparatus as claimed in claim 1, **characterized in that** the cavity (51) is aligned in parallel with the longitudinal direction (5) of the guide rail.

10. Apparatus as claimed in claim 1, **characterized in that** the end faces (21, 22) of the basic body (10) are closed by covers (81, 82) deformable at least in a direction transverse to the longitudinal direction (5) of the guide rail, said covers (81, 82) holding seals (85) provided in the area of central fibre (77).

## Revendications

1. Dispositif de freinage et/ou de serrage destiné à être monté sur un chariot (1) guidé parallèlement à un rail de guidage (7),
- au moins deux mâchoires de frein (91, 92) qui entrent en contact avec le rail de guidage (7) pour freiner ou serrer ledit rail étant disposées sur un corps de base (10) de façon à se faire face,
- le corps de base (10) enserrant le rail de guidage (7) partiellement à la manière d'une pince en formant une zone de bride (13) au-dessus du rail de guidage (7) et deux zones latérales (11, 12) situées à droite et à gauche du rail de guidage (7) et portant les mâchoires de frein (91, 92),
- la zone de bride (13) et les zones latérales (11, 12) formant une rainure (25) dans le corps de base qui entoure le rail de guidage (7) partiellement,
**caractérisé en ce**
- **que** le corps de base (10) est assemblé solidement avec sa face supérieure (15) au chariot porteur (1),
- **qu'**un évidement (51) susceptible d'être sollicité par une pression est disposé dans le corps de base (10), entre la face frontale avant et la face frontale arrière (21, 22) du corps de base, qui traverse, au moins par zones, la zone de bride (13) et les deux zones latérales (11, 12),
- **que** des sections (55-57) de l'évidement continu (51) sont disposées, au moins par zones, le long de la rainure (25) dans le corps de base et le long des parois latérales extérieures (17, 18) du corps de base,
- **que** la section (55) de l'évidement (51) réalisée autour de la rainure (25) dans le corps de base (51) et les sections (56, 57) de l'évidement (51) disposées par paire le long des parois latérales (17, 18) sont utilisées en combinaison et
- **que** l'évidement (51) est fermé à la hauteur de faces frontales (21, 22).

2. Dispositif selon la revendication 1, **caractérisé en ce que** l'évidement (51), transversalement à une fibre centrale ou fibre neutre (77) se trouvant dans l'évidement (51), a une largeur inférieure à 1 mm au moins par zones, ladite ou lesdites zones ensemble représentant au moins 50 pourcent de la longueur de la fibre centrale ou fibre neutre (77).

3. Dispositif selon la revendication 2, **caractérisé en ce que** la largeur maximale de l'évidement (51) est inférieure à dix fois la largeur régulière.

4. Dispositif selon la revendication 1, **caractérisé en ce que** l'évidement (51), par rapport à la section transversale du corps de base (10), a un profil de courbure qui correspond à la forme d'un « W ».

5. Dispositif selon la revendication 2, **caractérisé en ce que** les extrémités libres de la fibre centrale ou fibre neutre (77) dans la section du corps de base (10) se trouvent dans le tiers supérieur de la zone de bride (13), la distance par rapport à la paroi latérale (17, 18) la plus proche étant inférieure à 10 % de la largeur du corps de base.

6. Dispositif selon la revendication 2, **caractérisé en ce que** le maximum de la fibre centrale ou fibre neutre (77) dans la section transversale du corps de base (10) se trouve à la hauteur des extrémités libres de la fibre centrale ou fibre neutre (77) ou dans le tiers médian de la zone de bride (13).

7. Dispositif selon la revendication 2, **caractérisé en ce que** le minimum concerné de la fibre centrale ou fibre neutre (77) dans la section transversale du corps de base (10) se trouve dans le tiers médian de la hauteur de la zone latérale concernée (11, 12).

8. Dispositif selon la revendication 2, **caractérisé en ce qu'**au moins 60 % de la fibre centrale ou fibre neutre (77) dans la section transversale du corps de base (10) se trouvent sur un cercle dont le centre se situe dans le plan longitudinal médian vertical (6).

9. Dispositif selon la revendication 1, **caractérisé en ce que** l'évidement (51) est orienté parallèlement à la direction longitudinale du guidage (5).

10. Dispositif selon la revendication 1, **caractérisé en ce que** les faces frontales (21, 22) du corps de base (10) sont fermées à l'aide de couvercles (81, 82) déformables au moins dans une direction transversale à la direction longitudinale du guidage (5), les couvercles (81, 82) maintenant en position des joints d'étanchéité (85) disposés à proximité de la fibre centrale ou fibre neutre (77).
